# EUROPÄISCHE PATENTSCHRIFT

(11) **EP 0 809 923 B1**
(45) Veröffentlichungstag und Bekanntmachung des Hinweises auf die Patenterteilung: **11.08.1999**
(21) Anmeldenummer: 96901712.8
(22) Anmeldetag: 08.02.1996
(51) Int. Cl.: H05B 41/29

(54) **SCHALTUNGSANORDNUNG ZUM BETRIEB EINER ENTLADUNGSLAMPE**
CIRCUIT FOR OPERATING A DISCHARGE LAMP
CIRCUIT DESTINE AU FONCTIONNEMENT D'UNE LAMPE A DECHARGE

(30) Priorität: 17.02.1995 DE 19505459
(43) Veröffentlichungstag der Anmeldung: 03.12.1997
(73) Patentinhaber: Patent-Treuhand-Gesellschaft für elektrische Glühlampen mbH, 81543 München (DE)
(72) Erfinder: RAISER, Franz, D-80689 München (DE)
(86) Internationale Anmeldenummer: DE9600198
(87) Internationale Veröffentlichungsnummer: WO9625833

(56) Entgegenhaltungen:
- EP-A- 0 648 068
- WO-A-94/06262
- DE-A- 3 626 209
- US-A- 4 554 487

## Beschreibung

Die Erfindung betrifft eine Schaltungsanordnung zum Betrieb einer Entladungslampe gemäß dem Oberbegriff von Anspruch 1.

Im Betrieb und bei der Zündung einer Entladungslampe können bei einer schadhaften Lampe und gegen Ende der Lebensdauer der Lampe hohe Spannungen auftreten, die zur Zerstörung des jeweiligen elektronischen Vorschaltgerätes führen können, sofern keine geeigneten Gegenmaßnahmen getroffen werden. Man verwendet gewöhnlicherweise eine Abschaltschaltung zur Überwachung der Lampenspannung. Sobald die Lampenspannung länger als eine vorgegebene Zeit über einem bestimmten Wert liegt, greift die Abschaltung ein und der Lampengenerator, der im allgemeinen ein Halbbrückengenerator ist, wird außer Betrieb gesetzt.

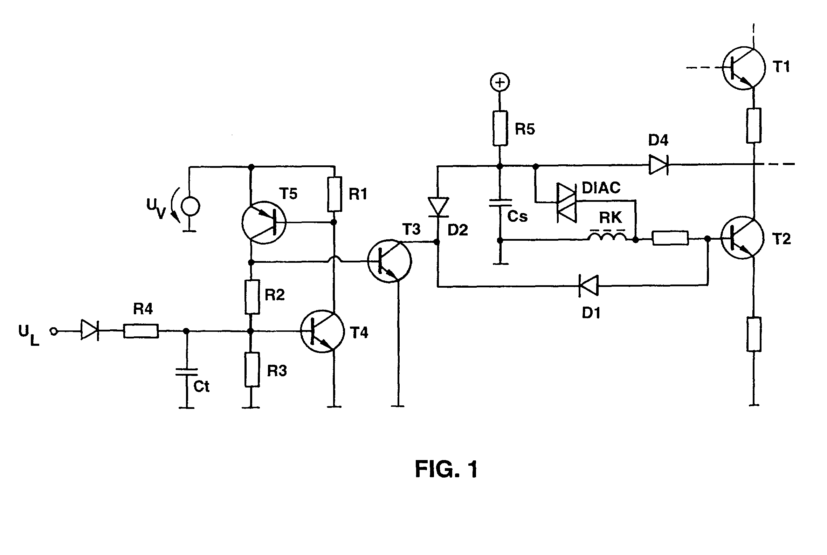

Es sind bereits elektronische Vorschaltgeräte der Firma OSRAM GmbH (Produktbezeichnung QT EC) mit einer Abschalteinrichtung bekannt. Eine diesem Stand der Technik entsprechende Schaltungsanordnung ist in Fig.1 skizziert. Dabei ist die Abschalteinrichtung aus einer bistabilen Kippschaltung gebildet, die aus zwei Transistoren T4 und T5 (Thyristor-Ersatzschaltung) besteht. Die Lampenspannung U_{L} wird über einen Spannungsteiler R4, R3 und ein Verzögerungsglied R4, Ct der Basis eines der Transistoren der bistabilen Kippschaltung zugeführt, die den Triggereingang dieser Schaltung bildet. Wenn die bistabile Kippschaltung in ihren leitenden bzw. Betriebszustand kippt, hält ein Abschalttransistor T3 den Lampengenerator, der im beschriebenen Falle ein Halbbrückengenerator ist, an, indem er die Basisansteuerung des unteren Transistors T2 des Halbbrückengenerators über eine Diode D1 unterdrückt. Ein Startkondensator Cs, der über eine Diode D4 parallel zur Schaltstrecke des unteren Transistors T2 des Halbbrückengenerators liegt, wird über eine Diode D2 kurzgeschlossen, so daß erneute Startversuche des Wechselrichters verhindert werden.

Diese bekannte Schaltung hat insbesondere zwei Nachteile. Damit das Schwingen des Halbbrückengenerators sicher unterbrochen werden kann, muß die Basis des Transistors T2 der Halbbrückenschaltung niederohmig mit Masse verbunden werden. Da aber das Basispotential des Transistors T2 des Halbbrückengenerators auch negative Werte annehmen kann, ist die Basis dieses Transistors T2 des Halbbrückengenerators über eine Diode D1 mit dem Kollektor des Abschalttransistors T3 verbunden. Dadurch wird allerdings ein sicheres Abschalten erschwert, da die Basis des unteren Transistors T2 beim Abschalten nicht direkt, sondern über die Diodenstrecke von D1 über T3 an Masse gelegt wird.

Ein weiterer Nachteil der bekannten Schaltungsanordnung besteht darin, daß eine Energiequelle Uᵥ bereitgestellt werden muß, die den Basisstrom für den Abschalttransistor T3 liefert. Bei bekannten Schaltgsanordnungen ist hierzu ein Elektrolyt-Kondensator vorgesehen, der entweder durch das Triggersignal oder über eine Pumpschaltung geladen wird.

Es ist daher die Aufgabe der vorliegenden Erfindung, eine Schaltungsanordnung zum Betrieb einer Entladungslampe bereitzustellen, bei der die obengenannten Probleme vermieden werden.

Diese Aufgabe wird erfindungsgemäß durch die Schaltungsanordnungen gelöst, wie sie in den Ansprüchen 1 und 3 definiert sind.

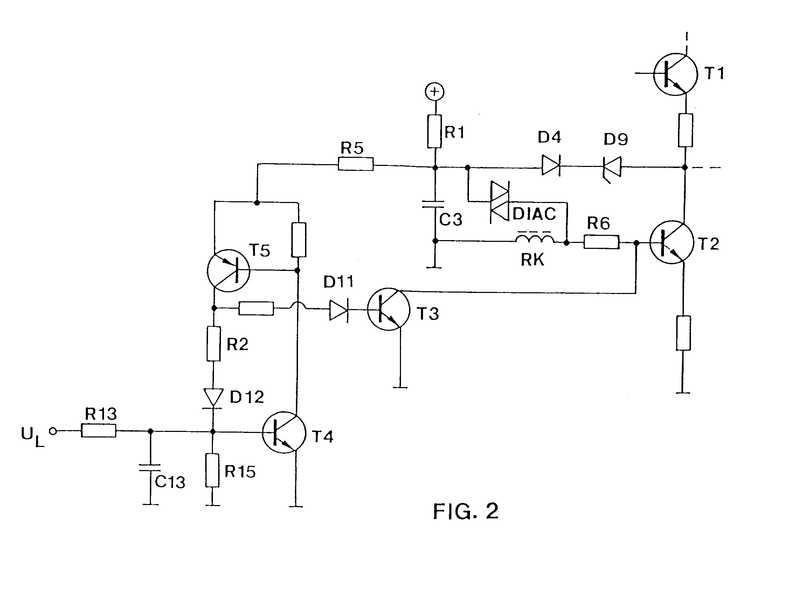

Die erfindungsgemäße Ausgestaltung der Schaltungsanordnung gemäß Anspruch 1 (Figur 2) hat den Vorteil, daß keine zusätzliche Energiequelle für den Abschaltvorgang benötigt wird, sondern diese Energiequelle durch den ohnehin schon vorhandenen Startkondensator C3 gebildet wird. Bei der zuvor erwähnten bekannten Schaltung wird, wenn der Halbbrückengenerator in Betrieb ist, der Startkondensator über eine Diode D4 entladen, die parallel zur Schaltstrecke des Transistors T2 des Halbbrückengenerators liegt.

Durch das Einfügen einer Zenerdiode D9 gemäß Anspruch bleibt der Startkondensator C3 auf dem Wert der Zenerspannung der Zenerdiode geladen und wird in dieser Weise als Energiequelle genutzt. Wird die bistabile Kippstufe T5, T4 leitend, so wird nicht nur der Lampengenerator gestoppt, sondern auch ein Neustart durch das Endaden des Startkondensators verhindert.

Die bevorzugte Schaltungsanordnung gemäß Anspruch 3 hat den Vorteil, daß ein sicheres Abschalten gewährleistet wird, da die Kollektor-Emitter-Strecke des Abschalttransistors T3 direkt zwischen der Basis des Transistors T2 des Halbbrückengenerators und Masse liegt. Durch eine Diode D12 zwischen dem Kollektor des Transistors T5 und der Basis des Transistors T4, der den Triggereingang der bistabilen Kippschaltung bildet, werden negative Kollektorströme des Abschalttransistors T3 bei negativem Basispotential des Transistors T2 des Halbbrückengenerators verhindert. Außerdem kann eine weitere Diode D11 zur Potentialanpassung der Basisanschlüsse des Transistors T4, der den Triggereingang der bistabilen Kippschaltung bildet, und des Abschalttransistors T3 vorgesehen werden.

Aus der WO-A-94/06262 ist eine Stromversorgung für beleuchtete Displays bekannt, die ein Ein-Transistor-Schaltnetzteil beinhaltet.

In den Dokumenten US-A-4 554 487 und DE-A-36 26 209 sind Schaltungsanordnungen für Entladungslampen beschrieben, die jeweils einen Halbbrückengenerator und einen Abschalttransistor aufweisen. Die Triggerung des Abschalttransistors wird hierbei mit Hilfe eines Diacs durchgeführt.

In der EP-A-0 648 068 ist außerdem eine Schaltungsanordnung zum Betrieb elektrischer Lampen beschrieben, bei der der Halbbrückengenerator mittels eines Feldeffekttransistors außer Funktion gesetzt werden kann: Die Ansteuerung des Feldeffekttransistors erfolgt hierbei mit Hilfe eines bistabilen Multivibrators.

Weitere Vorteile, Merkmale und Anwendungsmöglichkeiten der Erfindung ergeben sich aus der nachfolgenden Beschreibung eines Ausführungsbeispieles der Erfindung im Zusammenhang mit der Zeichnung.

In der Zeichnung zeigt:
- Fig. 1: eine Schaltungsanordnung gemäß dem Stand der Technik;
- Fig. 2: ein erstes Ausführungsbeispiel einer Schaltungsanordnung gemäß der Erfindung, und
- Fig. 3: ein zweites Ausführungsbeispiel einer Schaltungsanordnung gemäß der Erfindung.

Fig. 2 zeigt eine Schaltungsanordnung zum Betrieb einer Entladungslampe mit einem Halbbrückengenerator, der aus einem unteren Transistor T2 und einem oberen Transistor T1 gebildet ist. Parallel zu dem Transistor T2 liegt ein in Fig. 2 nicht dargestellter Lastkreis mit einer Entladungslampe E. Die Lampenspannung U2 wird über einen Spannungsteiler R13, R15 und ein Verzögerungsglied R13, C13 der Basis eines Transistors T4 zugeführt, der den Triggereingang einer bistabilen Kippschaltung aus einem ersten und einem zweiten Transistor T4 bzw. T5 bildet. Wenn die Kippschaltung im leitenden Zustand ist, hält ein Abschalttransistor T3 den Halbbrückengenerator an, indem er die Basisansteuerung des Transistors T2 unterdrückt.

Parallel zur Schaltstrecke des Transistors T2 liegt der Startkondensator C3 in Reihe zur Diode D4 und zur Zenerdiode D9. Durch diese Zenerdiode D9 wird der Startkondensator C3 auf den Wert der Zenerspannung geladen und kann somit als Energiequelle für den Basisstrom des Abschalttransistors T3 dienen.

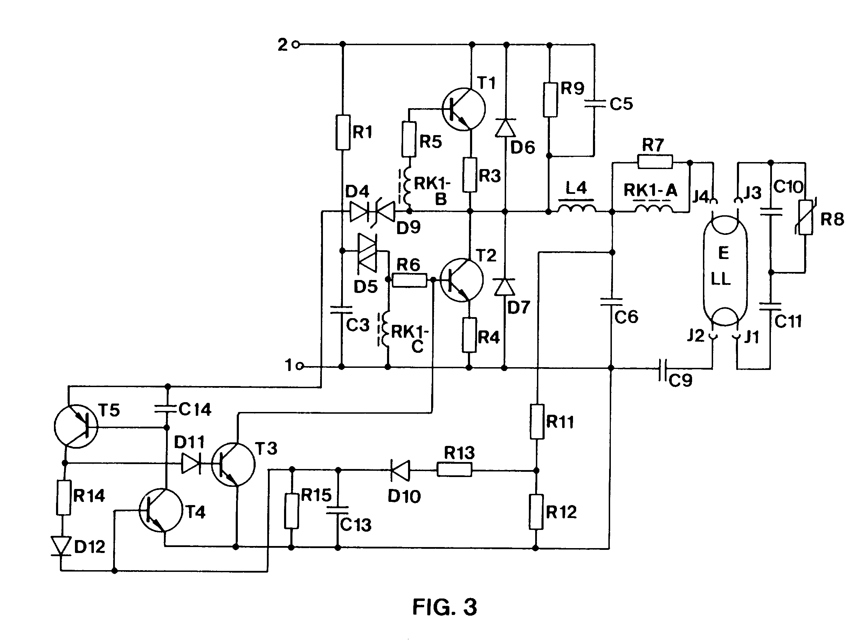

Zum Starten des Halbbrückengenerators T1, T2 wird der Startkondensator C3 über einen Widerstand R1 bis zum Erreichen der Durchbruchspannung eines Diacs DIAC geladen. Über den Diac DIAC fließt ein Basisstrom des Halbbrükkentransistors T1 Dadurch wird der Transistor T2 in den leitenden Zustand geschaltet, so daß ein Laststrom in den Lastkreis C10, C11, R8 in Figur 3 der Entladungslampe E fließt.

Eine Wicklung (RK1-A in Fig. 3) im Lastkreis ist mit einer Wicklung Rk (RK1-C in Fig. 3) gekoppelt, die zwischen einem der Basis des Transistors T2 vorgeschalteten Widerstand R6 und Masse geschaltet ist. Damit wird eine selbsterhaltende Schwingung des Halbbrückengenerators angestoßen.
Nach dem Anschwingen des Generators lädt sich C3 auf die Zenerspannung von D9 auf.

Weiterhin können eine Diode D11 an der Basis des Transistors T3 zur Potentialanpassung der Basisanschlüsse der Transistoren T4 und T3 sowie eine Diode D12 zwischen dem Kollektor des zweiten Transistors T5 und der Basis des ersten Transistors T4 in einer Schaltungsanordnung zum Betrieb einer Entladungslampe vorgesehen sein.

Während in der Schaltung nach Figur 1 eine Diode D1 vorgesehen ist, die dazu dient, bei negativer Basis-Emitter-Spannung des Transistors Tu ein Entladen von Ct über die Basis-Kollektor-Strecke von T3 zu verhindern, ist in der erfindungsgemäßen Schaltung nach Figur 2 vorgesehen, das diese Diode entfällt. In der erfindungsgemäßen Schaltung nach Figur 2 wird das Entladen von C13 durch die Diode D12 unterbunden. Damit wird es möglich, den Kollektor des Abschalttransistors T3 direkt an die Basis des Halbbrückentransistors T2 anzuschließen, so daß im Abschaltfall die Basis von T2 niederohmiger (ohne Spannungsabfall an der nach Figur 1 vorgesehenen Diode D1) mit Masse verbunden wird.

D11 dient dazu, sicherzustellen, daß ein hinreichend großer Ansteuerstrom für T4 bereitgestellt wird, so daß nicht der gesamte Kollektor-Strom von T5 in die Basis von T3 abfließt.

In diesem bevorzugten Ausführungsbeispiel sind die beiden Schaltungsanordnungen nach Anspruch 1 und Anspruch 3 zur Lösung der oben genannten Probleme in einer Schaltung verwirklicht. Sie können jedoch ohne weiteres auch unabhängig voneinander eingesetzt werden.

Die in Figur 3 dargestellte Schaltungsanordnung ist ähnlich strukturiert wie die in Figur 2 dargestellte Schaltungsanordnung, die das erfinderische Prinzip darstellt. Dieselben Komponenten sind mit denselben Bezugszeichen bezeichnet.

Die Schaltungsanordnung nach Figur 3 weist ein nicht dargestelltes Spannungsversorgungsteil an den Klemmen 1 (Masse), 2 sowie einen Lampenvorheizkreis mit Kondensatoren C10, C11 und einem Kaltleiter R8 auf. Die Halbbrücke weist zwei Freilaufdioden D6 und D7 auf. Ein Widerstand R9 dient dazu, den Mittelabgriff der Halbbrücke an den Transistoren T 1 und T2 zum Anschwingen der Halbbrücke auf ein vorbestimmtes Potential zu ziehen. Ein Kondensator C5 (Trapezkondensator, "snubber") dient dazu, Schaltverluste der Halbbrückentransistoren zu reduzieren.

Ein Kondensator C6 fungiert als zusätzlicher Resonanzkondensator, der der Erhöhung der Generatorausgangsspannung dient.

Über eine Diode D10 wird die Lampenspannung gleichgerichtet, um die Spitzenspannung der Lampenspannung zu detektieren.

Ein Kondensator C14 verhindert ein Triggern der bistabilen Kippschaltung durch Störeinflüsse, die zB. auf Übersprechen zwischen Leiterbahnen der Schaltungsanordnung beruhen.

## Patentansprüche

1. Schaltungsanordnung zum Betrieb einer Entladungslampe, vorzugsweise einer Niederdruckentladungslampe, mit einem Halbbrückengenerator mit einem oberen (T1) und einem unteren Transistor (T2), bei der eine der Lampenspannung (U_{L}) proportionale Spannung über ein Verzögerungsglied (R13, C13) der Basis eines ersten Transistors (T4) zugeführt wird, der den Triggereingang einer bistabilen Kippschaltung aus einem ersten und einem zweiten Transistor (T4, T5) bildet, wobei ein Abschalttransistor (T3) den Halbbrückengenerator (T1, T2) außer Funktion setzt, wenn die Kippschaltung (T4, T5) in dem leitenden Zustand ist, indem der Abschalttransistor (T3) die Basisansteuerung des unteren Transistors (T2) des Halbbrückengenerators unterdrückt, und wobei der Halbbrückengenerator (T1, T2) durch einen Startkondensator (C3) gestartet werden kann, der während des Betriebs des Halbbrückengenerators über eine Entladediode (D4) entladen wird, dadurch gekennzeichnet, daß der Startkondensator (C3) die Energiequelle für den Basisstrom des Abschalttransistors (T3) bildet.

2. Schaltungsanordnung gemäß Anspruch 1, dadurch gekennzeichnet, daß außerdem eine Zenerdiode (D9) zwischen der Entladediode (D4) und dem Kollektoranschluß des Transistors (T2) des Halbbrückengenerators angeordnet ist.

3. Schaltungsanordnung zum Betrieb einer Entladungslampe, vorzugsweise einer Niederdruckentladungslampe, mit einem Halbbrückengenerator mit einem oberen Transistor (T1) und einem unteren Transistor (T2), bei der eine der Lampenspannung (U_{L}) proportionale Spannung über ein Verzögerungsglied (R13, C13) der Basis eines ersten Transistors (T4) zugeführt wird, der den Triggereingang einer bistabilen Kippschaltung aus einem ersten und einem zweiten Transistor (T4, T5) bildet, wobei ein Abschalttransistor (T3) den Halbbrückengenerator außer Funktion setzt, wenn die Kippschaltung (T4, T5) in dem leitenden Zustand ist, indem der Abschalttransistor (T3) die Basisansteuerung des unteren Transistors (T2) des Halbbrückengenerators unterdrückt, und wobei der Halbbrückengenerator durch einen Startkondensator (C3) gestartet werden kann, der während des Betriebs des Halbbrückengenerators über eine Entladediode (D4) entladen wird, dadurch gekennzeichnet,
- daß die Kollektor-Emitter-Strecke des Abschalttransistors (T3) direkt zwischen der Basis des unteren Transistors (T2) des Halbbrückengenerators und Masse liegt,
- daß eine Diode (D12) zwischen dem Kollektor des einen Transistors (T5) der bistabilen Kippschaltung und der Basis des anderen Transistors (T4) der bistabilen Kippschaltung angeordnet ist und
- daß eine Diode (D1) in der Basiszuleitung des Abschalttransistors (T3) angeordnet ist.

## Claims

1. Circuit arrangement for operating a discharge lamp, preferably a low-pressure discharge lamp, having a half-bridge generator with an upper (T1) and a lower transistor (T2), in which a voltage proportional to the lamp voltage (U_{L}) is fed via a delay element (R13, C13) to the base of a first transistor (T4), which forms the trigger input of a bistable multivibrator comprising a first and a second transistor (T4, T5), a turn-off transistor (T3) deactivating the half-bridge generator (T1, T2) when the multivibrator (T4, T5) is in the on state by the turn-off transistor (T3) suppressing the base driving of the lower transistor (T2) of the half-bridge generator, and the half-bridge generator (T1, T2) being able to be started by a start capacitor (C3), which is discharged via a discharge diode (D4) during operation of the half-bridge generator, characterized in that the start capacitor (C3) forms the energy source for the base current of the turn-off transistor (T3).

2. Circuit arrangement according to Claim 1, characterized in that, in addition, a zener diode (D9) is arranged between the discharge diode (D4) and the collector terminal of the transistor (T2) of the half-bridge generator.

3. Circuit arrangement for operating a discharge lamp, preferably a low-pressure discharge lamp, having a half-bridge generator with an upper transistor (T1) and a lower transistor (T2), in which a voltage proportional to the lamp voltage (U_{L}) is fed via a delay element (R13, C13) to the base of a first transistor (T4), which forms the trigger input of a bistable multivibrator comprising a first and a second transistor (T4, T5), a turn-off transistor (T3) deactivating the half-bridge generator when the multivibrator (T4, T5) is in the on state by the turn-off transistor (T3) suppressing the base driving of the lower transistor (T2) of the half-bridge generator, and the half-bridge generator being able to be started by a start capacitor (C3), which is discharged via a discharge diode (D4) during operation of the half-bridge generator, characterized
- in that the collector-emitter path of the turn-off transistor (T3) is connected directly between the base of the lower transistor (T2) of the half-bridge generator and earth,
- in that a diode (D12) is arranged between the collector of one transistor (T5) of the bistable multivibrator and the base of the other transistor (T4) of the bistable multivibrator, and
- in that a diode (D1) is arranged in the base lead of the turn-off transistor (T3).

## Revendications

1. Montage pour faire fonctionner une lampe à décharge, de préférence une lampe à décharge à basse pression, qui comporte un générateur en demi-pont ayant un transistor (T1) supérieur et un transistor (T2) inférieur et dans lequel une tension proportionnelle à la tension (U_{L}) de la lampe est envoyée par l'intermédiaire d'un élément (R13, C13) de temporisation à la base d'un premier transistor (T4) qui forme l'entrée de déclenchement d'un circuit à bascule bistable constitué d'un premier transistor (T4) et d'un deuxième transistor (T5), un transistor (T3) de déconnexion mettant hors service le générateur (T1, T2) en demi-pont quand le circuit (T4, T5) à bascule est à l'état passant du fait que le transistor (T3) de déconnexion supprime la commande de la base du transistor (T2) inférieur du générateur en demi-pont, et le générateur (T1, T2) en demi-pont pouvant être mis en service par un condensateur (C3) de mise en service qui est déchargé par l'intermédiaire d'une diode (D4) de décharge pendant le fonctionnement du générateur en demi-pont, caractérisé en ce que le condensateur (C3) de mise en service forme la source d'énergie pour le courant de base du transistor (T3) de déconnexion.

2. Montage suivant la revendication 1, caractérisé en ce qu'il est monté en outre une diode (D9) de Zener entre la diode (D4) de décharge et la borne de collecteur du transistor (T2) du générateur en demi-pont.

3. Montage pour faire fonctionner une lampe à décharge, de préférence une lampe à décharge à basse pression, qui comporte un générateur en demi-pont ayant un transistor (T1) supérieur et un transistor (T2) inférieur et dans lequel une tension proportionnelle à la tension (U_{L}) de la lampe est envoyée par l'intermédiaire d'un élément (R13, C13) de temporisation à la base d'un premier transistor (T4) qui forme l'entrée de déclenchement d'un circuit de bascule bistable constitué d'un premier transistor (T4) et d'un deuxième transistor (T5), un transistor (T3) de déconnexion mettant hors service le générateur en demi-pont quand le circuit (T4, T5) de bascule est à l'état passant, du fait que le transistor (T3) de déconnexion supprime la commande de la base de transistor (T2) inférieur du générateur en demi-pont, et le générateur en demi-pont pouvant être mis en service par un condensateur (C3) de mise en service qui est déchargé par l'intermédiaire d'une diode (D4) de décharge pendant le fonctionnement du générateur en demi-pont, caractérisé en ce que
- la section collecteur-émetteur du transistor (T3) de déconnexion se trouve directement entre la base du transistor (T2) inférieur du générateur en demi-pont et la masse,
- une diode (D12) est montée entre le collecteur de l'un (T5) des transistors du circuit de bascule bistable et la base de l'autre transistor (T4) du circuit de bascule bistable, et
- une diode (D1) est montée dans la ligne d'alimentation de la base du transistor (T3) de déconnexion.
